# EUROPEAN PATENT APPLICATION

(11) **EP 1 560 121 A1**
(43) Date of publication of application: **03.08.2005**
(21) Application number: 03751352.0
(22) Date of filing: 07.10.2003
(51) Int. Cl.: G06F 13/00

(54) **DATA RELAY DEVICE AND DATA MANAGEMENT SYSTEM USING THE SAME**

(30) Priority: 09.10.2002 JP 2002296721
(71) Applicant: ARKRAY, Inc., Kyoto 691-8045 (JP)
(72) Inventor: YAMADA, Kinnichi, Kyoto-shi, Kyoto 601-8045 (JP); KINOSE, Tamotsu, Shimogyou-ku, Kyoto-shi, Kyoto 600-8815 (JP); CHIKAKIYO, Hirokazu, Tokushima-shi, Tokushima 770-8012 (JP)
(74) Representative: Power, Philippa Louise
(86) International application number: PCT/JP2003/012815
(87) International publication number: WO 2004/034267

(57) **Abstract**

A data relay device and a data management system that eliminate the need for changing the setting when a new testing or measuring device is added is provided. An adapter 4 for connecting to a LAN 3 plural kinds of testing devices 5a, 5b ... generating data in different formats stores in advance a conversion program for converting an individual message of each of the devices into a common message according to the kinds of the testing devices 5a, 5b ..., converts the individual message sent from the testing devices 5a, 5b ... in a serial manner into a common format and sends it to a communication management terminal 2.

## Description

### Technical Field

The present invention relates to a relay device used for connecting various devices such as clinical examination devices to a network such as a LAN.

### Background Art

Conventionally, systems in which data measured by measuring devices are collected and processed in a server are used widely. For example, in hospitals or the like, a system has been introduced in which measuring devices and testing devices used in individual diagnosis and treatment departments and testing departments are connected to an intra-hospital network so that the patient's data can be managed collectively in a server.

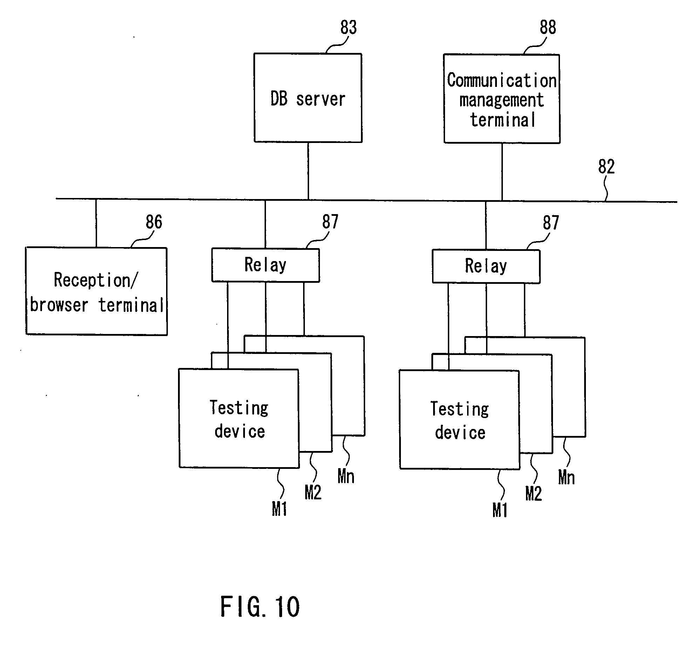

However, since the formats of data outputted by individual measuring and testing devices are not uniform, it is necessary to convert them into a common format somewhere in the network. FIG. 10 shows an example of a conventional system configuration. The system shown in FIG. 10 connects plural kinds of testing devices M1 to Mn to a LAN 82 via a relay 87 and temporarily sends data measured by the testing devices M1 to Mn from the relay 87 through the LAN 82 to a communication management terminal 88. The relay 87 converts the data outputted by a serial bus 84 from the testing devices M1 to Mn into a format that can be sent through the LAN 82. Thereafter, the communication management terminal 88 converts the data received from the relay 87 via the LAN 82 into a common format that can be processed in a database server 83 etc. and then sends it to the database server 83.

Conventionally, there is also a known system for processing plural kinds of measuring devices by a server. For example, a user of the measuring device registers a format of the result of data processing in a server in advance. Then, at the time of measuring, the user sends measurement data and a format ID to the server so that the server converts the format of the result of processing the measurement data into a format corresponding to the format ID and outputs this result (JP 2001-338042 A).

However, in the conventional system described above, when attempting to add a new testing or measuring device, it has been necessary to set manually an additional communication condition and an additional data format corresponding to the device to be added. For example, in the case of the system shown in FIG. 10, information for recognizing a newly-connected device, a conversion program for converting data measured by this device into a common format, etc. have to be added to the communication management terminal 88. Also, in the case of the system described in JP 2001-338042 A, a data processing format and a format ID for a newly-connected measuring device need to be added to the server.

### Disclosure of Invention

It is an object of the present invention to provide a data relay device and a data management system that save the above-described time and trouble and eliminate the need for changing the setting when a new testing or measuring device is added.

In order to achieve the above-mentioned object, a data relay device of the present invention is a data relay device for connecting to a network a plurality of kinds of data generating devices generating data in different formats, including a data receiving portion for receiving the data from the plurality of kinds of data generating devices, and a converting portion for converting the data received by the data receiving portion into a common format that is processable by other devices on the network.

Further, in order to achieve the above-mentioned object, a data management system according to the present invention is a data management system in which, using a data relay device for connecting to a network a plurality of kinds of data generating devices generating data in different formats, the data generating devices are connected to a data management device on the network. The data relay device includes a data receiving portion for receiving the data from the plurality of kinds of data generating devices, and a converting portion for converting the data received by the data receiving portion into a common format that is processable by other devices on the network. The data management device processes the data from the data generating devices in the common format.

### Brief Description of Drawings

FIG. 1 is a block diagram showing a schematic configuration of a data management system according to a first embodiment of the present invention.
FIG. 2 is a drawing for describing an operation of the data management system according to the first embodiment when a usual testing is conducted.
FIG. 3 is a drawing for describing an exemplary format of a common message formed in an adapter in the data management system according to the first embodiment.
FIG. 4 is a drawing for describing an exemplary format of a common message for requesting a test result sent from a communication management terminal to the adapter in the data management system according to the first embodiment.
FIG. 5 is a drawing for describing an operation of the data management system according to the first embodiment when a testing device is added.
FIG. 6 is a drawing for describing an exemplary format of a common message of connected device information formed by the adapter in the data management system according to the first embodiment.
FIG. 7 is a block diagram showing a schematic configuration of a data management system according to a second embodiment of the present invention.
FIG. 8 is a drawing for describing an operation of the data management system according to the second embodiment when a testing device is added.
FIG. 9 is a drawing for describing a flow of an analytical processing conducted by an adapter in the data management system according to the second embodiment.
FIG. 10 is a block diagram showing an example of a conventional data management system.

### Best Mode for Carrying Out the invention

It is preferable that the above-described data relay device according to the present invention further includes a connected device information storing portion for storing device information on the connected data generating devices, and a device information updating portion for, when receiving from one of the data generating devices data containing device information of the data generating device, making a comparison of the device information in the received data and the device information stored in the connected device information storing portion and updating a content of the connected device information storing portion according to a result of the comparison. Further, it is more preferable to provide a configuration further including a device information sending portion for sending the device information received from the data generating device to a data management device for processing the data from the data generating device via the network. Incidentally, the device information is information on the data generating device and can contain any items as long as it contains at least an item for specifying the kind of this data generating device.

It is preferable that the data relay device further includes a conversion program storing portion for storing a conversion program for causing the converting portion to conduct a conversion processing according to the kind of each of the data generating devices, and a conversion program obtaining portion for determining whether a conversion program for a data generating device is stored in the conversion program storing portion when the data generating device is newly connected and, if not, requesting the conversion program. Also, it is more preferable to provide a configuration further including an analyzing portion for extracting a feature of the data received from the data generating device, thereby specifying the kind of the connected data generating device.

Also, in the above-described data management system according to the present invention, it is preferable that the data relay device further includes a connected device information storing portion for storing device information on the connected data generating devices, and a device information updating portion for, when receiving from one of the data generating devices data containing device information of the data generating device, making a comparison of the device information in the received data and the device information stored in the connected device information storing portion and updating a content of the connected device information storing portion according to a result of the comparison. Further, it is more preferable that the data relay device further includes a device information sending portion for sending the device information received from the data generating device to the data management device via the network.

Preferably, the data management system of the present invention further includes a conversion program storing device for storing conversion programs for various kinds of the data generating devices, and the data relay device further includes a conversion program storing portion for storing a conversion program for causing the converting portion to conduct a conversion processing according to the kind of each of the data generating devices, and a conversion program obtaining portion for determining whether a conversion program for a data generating device is stored in the conversion program storing portion when the data generating device is newly connected and, if not, requesting the conversion program from the conversion program storing device.

In the data management system of the present invention, it is preferable that the data relay device further includes an analyzing portion for extracting a feature of the data received from the data generating device, thereby specifying the kind of the connected data generating device.

In the data management system of the present invention, it is preferable that the conversion program storing device further includes an analyzing portion for extracting a feature of the data received from the data generating device, thereby specifying the kind of the connected data generating device.

Alternatively, the data relay device may have a configuration of sending the conversion program obtained from the conversion program storing device to other data relay devices connected to the network, or the data relay device may have a configuration of periodically accessing the conversion program storing device and, if a new conversion program is stored, obtaining the conversion program and storing it in the conversion program storing portion.

In the following, specific embodiments of the present invention will be described with reference to the accompanying drawings.

### (First Embodiment)

The following is a description of an embodiment of the present invention, with reference to the accompanying drawings.

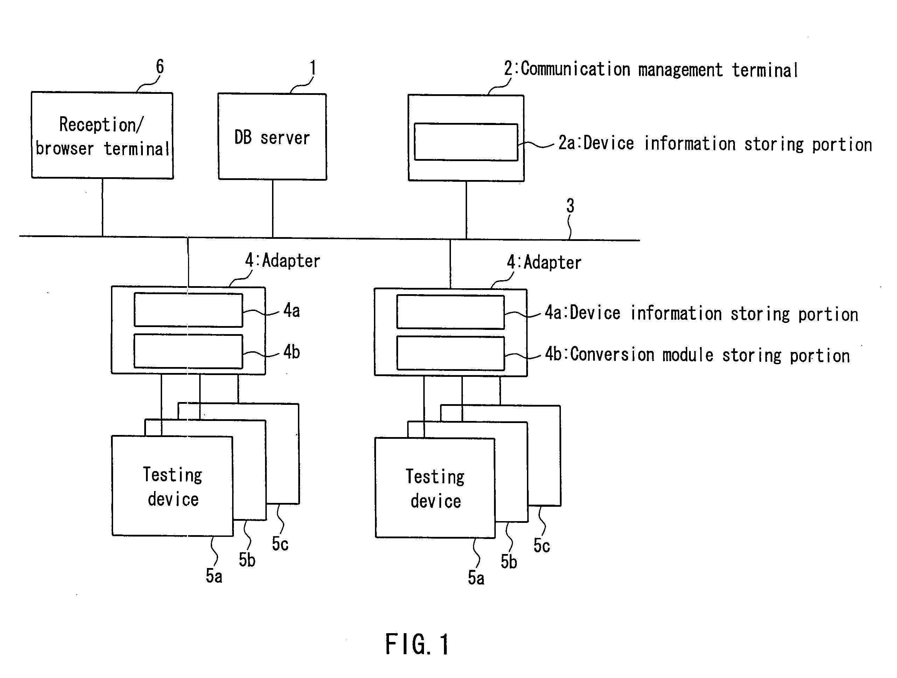

As shown in FIG. 1, a data management system according to the present embodiment includes a database (DB) server 1, a communication management terminal 2, a LAN 3, adapters 4 (data relay devices), testing devices 5 (data generating devices), a reception/ browser terminal 6, etc. The testing device 5 includes plural kinds of testing devices 5a, 5b, 5c ...

The DB server 1 collects and manages data measured by the testing devices 5. The present embodiment is directed to an example in which the LAN 3 is realized by the Ethernet (registered trademark), though there is no particular limitation to this.

The adapter 4 has a receiving portion (not shown) for receiving a message, i.e., an individual message, sent out from the testing devices 5a, 5b ... in a format utilized by each device and has a function of converting this individual message received by the receiving portion into a message, i.e., a common message, in a common format that can be handled by the LAN 3, the DB server 1 and the communication management terminal 2. Accordingly, in its conversion module storing portion 4b, the adapter 4 stores in advance a conversion program for converting the individual message of each testing device into the common message, according to the kind of the testing devices 5a, 5b ... A CPU (not shown) of the adapter 4 carries out a conversion processing according to this conversion program, thereby achieving the conversion function mentioned above.

Besides the conversion module storing portion 4b mentioned above, the adapter 4 has a device information storing portion 4a. The device information storing portion 4a in each of the adapters 4 contains information on a device serial ID, a device name, a form of communication, a message format, a message delimiter code etc. (device detailed information) for each of the testing devices 5 connected to this adapter 4. As described later, when each of the testing devices 5 is connected to the adapter 4, this device detailed information is sent from the testing device 5 to the adapter 4 and stored in the device information storing portion 4a. Alternatively, the device detailed information of the testing device 5 that is expected to be connected to the adapter 4 may be stored in advance in the device information storing portion 4a at the time of shipping or installing the adapter 4, and only minimum items for determining the kind of the testing device 5 (for example, the device serial ID, the device name or the like) may be sent as device information from the testing device 5 to the adapter 4.

As the information on the form of communication among the above-mentioned pieces of the device detailed information, data representing whether a serial communication or the Ethernet serves as the communication between this testing device 5 and the adapter 4 are stored. In the case of the serial communication, data on a baud rate, a data length, a parity, a stop bit etc. are stored. In the case of the Ethernet communication, an IP address of this testing device 5 is stored. As the information on the message format, data representing whether the message handled by the testing device 5 is variable or fixed in length are stored. In the case of varying length, data on the number of message blocks and the message length are stored. In the case of fixed length, data on the number of message blocks are stored. As the information on the message delimiter code, a message start code, a message end code, a block delimiter start code, a block delimiter end code etc. are stored.

The communication management terminal 2 performs processing including receiving the common message sent out from the testing device 5 via the adapter 4, extracting test result data from the received common message, editing these data in each test item or sample unit and sending the result to the DB server 1 for storage. The reception/ browser terminal 6 is used for receiving a testing request and browsing the test results.

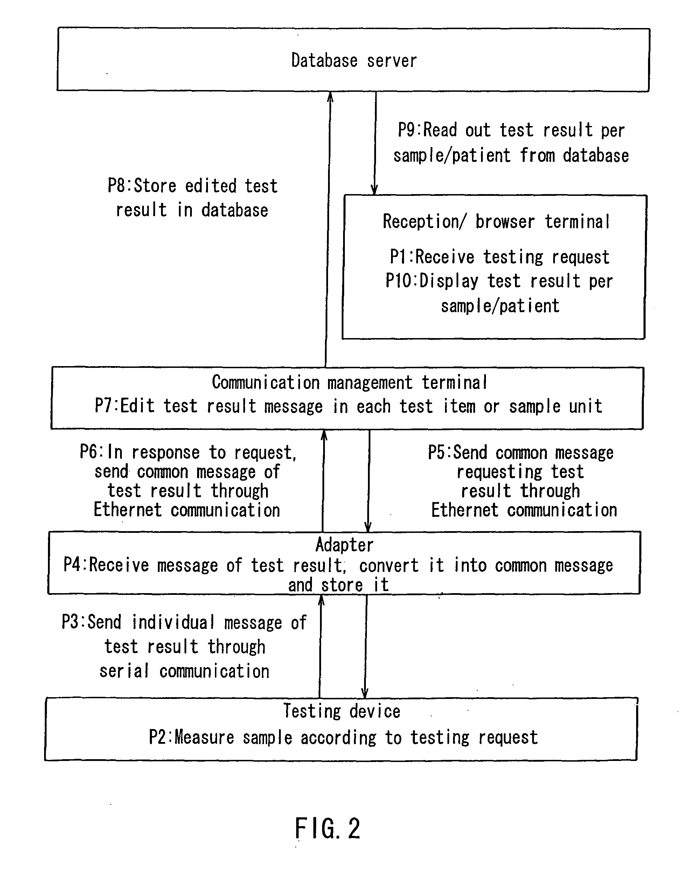

Herein, the operation of the present data management system at the time of usual testing will be explained referring to FIG. 2.

The input of a testing request from the reception/ browser terminal 6 starts a test routine (P1). After measuring a sample according to the testing request (P2), the testing device 5 forms an individual message containing the test result data and sends it to the adapter 4 through the serial communication (P3). On receipt of the individual message of the test result, the adapter 4 selects a conversion program for this testing device 5 from among conversion programs stored in the conversion module storing portion 4b and uses the selected conversion program to convert the received individual message into a common message. The formed common message is stored temporarily in a storing portion (not shown) inside the adapter 4 (P4).

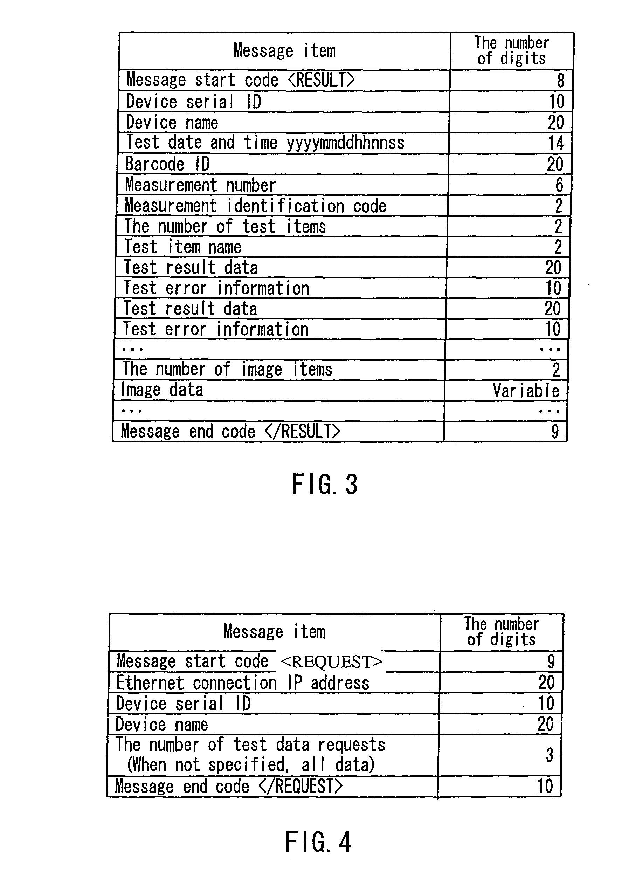

FIG. 3 shows an exemplary format of the common message of the test result formed and stored in the adapter 4 in the above-described P4. As shown in FIG. 3, the common message of the test result has a message start code "RESULT" and contains the device serial ID and the device name as the information on the testing device 5 that has conducted the testing (i.e., a sender of the individual message). These pieces of device information are extracted from the individual message from the testing device 5 as described earlier. Furthermore, the common message contains a test date and time, a barcode ID read out at the time of testing, a measurement number, a measurement identification code, the number of test items, a test item name, a test result, test error information, the number of image items, image data etc. This test result information also is extracted from the individual message from the testing device 5. It is noted that the fields of the test item name and the test result vary in number according to the number of the test items. Similarly, the field of the image data varies in number according to the number of the image items. Further, the fields in the common message are delimited by predetermined codes (for example, "I"), and a null character is inserted in an unnecessary field.

The communication management terminal 2 sends a common message requesting the test result to the adapter 4 at a predetermined timing (P5). On receipt of the common message requesting the test result, the adapter 4 takes out the common message that has been stored in the above-described P4 from the storing portion inside and sends it to the communication management terminal 2 via the LAN 3 (P6). The communication management terminal 2 extracts the test result data from the common message received from the adapter 4 and edits these data in each test item or sample unit (P7). Then, the communication management terminal 2 sends the edited test result to the DB server 1 for storage (P8). Thereafter, using the reception/ browser terminal 6, the test result per sample or patient is read out from the DB server 1 (P9) and can be displayed (P10).

FIG. 4 shows an exemplary format of the common message requesting the test result that is sent from the communication management terminal 2 to the adapter 4 in the above-described P5. As shown in FIG. 4, the common message requesting the test result is preceded by a code representing "REQUEST" as a message start code and contains an Ethernet connection IP address, a device serial ID, a device name and the number of test data requests of the testing device 5 requesting the test result. When the number of test data requests is not specified, this means that all the common messages stored in the adapter 4 are requested.

As described above, in the data management system of the present embodiment, the adapter 4 converts the device information and the test result information contained in the individual message from the testing device 5 into the common message and sends it to the communication management terminal 2.

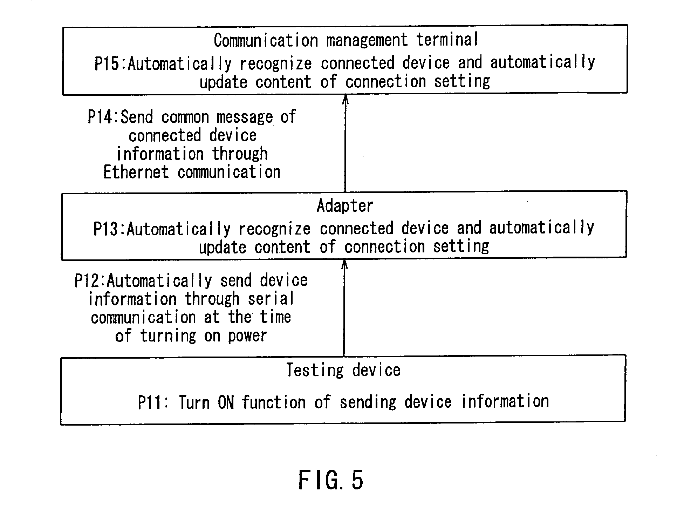

Now, the following is an explanation of an operation of the present data management system when a new testing device 5 is connected to the adapter 4, with reference to FIG. 5.

When a new testing device 5 is connected to an empty port of the adapter 4 with its sending function turned ON (P11), the testing device 5 sends a message containing its own device detailed information to the adapter 4 through a serial communication at the time of turning on the power (P12). The adapter 4 contains in the device information storing portion 4a the device detailed information on the devices connected to its own ports as described earlier and, on receipt of new device detailed information sent out in the above-described P12, automatically updates the content stored in the device information storing portion 4a (P13).

Further, at a predetermined timing, the adapter 4 forms the common message containing the device information of all the testing devices 5 connected to itself and sends it to the communication management terminal 2 through the Ethernet communication. Here, the device information contained in the common message may be the same as the device detailed information described above or information containing minimum items such as the device serial ID, the device name, etc. In this manner, the communication management terminal 2 automatically can recognize what kind of testing devices 5 currently are connected to each of the adapters 4 on the data management system. Further, the communication management terminal 2 extracts the device information from the common message received from the adapter 4 and stores this information in a device information storing portion 2a.

Here, at the time of turning on the power, the testing device 5 sends the message containing its own device detailed information alone (containing no test result) to the adapter 4, and then the adapter 4 obtains the device detailed information from this message. However, the adapter 4 also may obtain the device detailed information from the individual message that sends out the first test result after turning on the power of each testing device 5, for example.

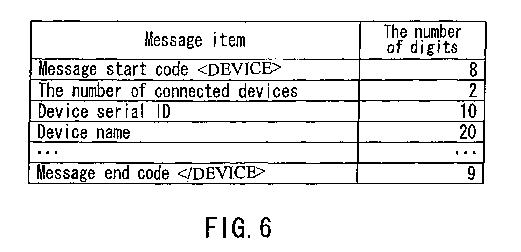

Now, FIG. 6 shows an exemplary format of the common message formed and sent out by the adapter 4 in the above-described P14. As shown in FIG. 6, the common message formed and sent out in P14 is preceded by a code representing "DEVICE" as a message start code and has a field representing the number of devices connected to that adapter 4 and fields of the device serial ID and the device name according to this number of devices. Although an example in which the device serial ID and the device name alone serve as the device information is illustrated here, the device information also may contain other data.

As described earlier, the communication management terminal 2 also contains in the device information storing portion 2a the information on the testing devices 5 connected to each of the adapters 4 and, on receipt of the common message sent out in P14, automatically updates the content stored in the device information storing portion 2a (P15).

As described above, in the data management system according to the present embodiment, when a new device 5 is connected to any of the adapters 4, the set contents in the adapter 4 and the communication management terminal 2 are updated automatically, thereby saving the time and trouble of changing the setting manually.

Although the present embodiment has been directed to an example in which the testing device 5 is connected to the adapter 4 in a serial manner, the connection topology is not limited to this. For example, the Ethernet connection also may be possible.

### (Second Embodiment)

The following is a description of another embodiment of the present invention, with reference to the accompanying drawings.

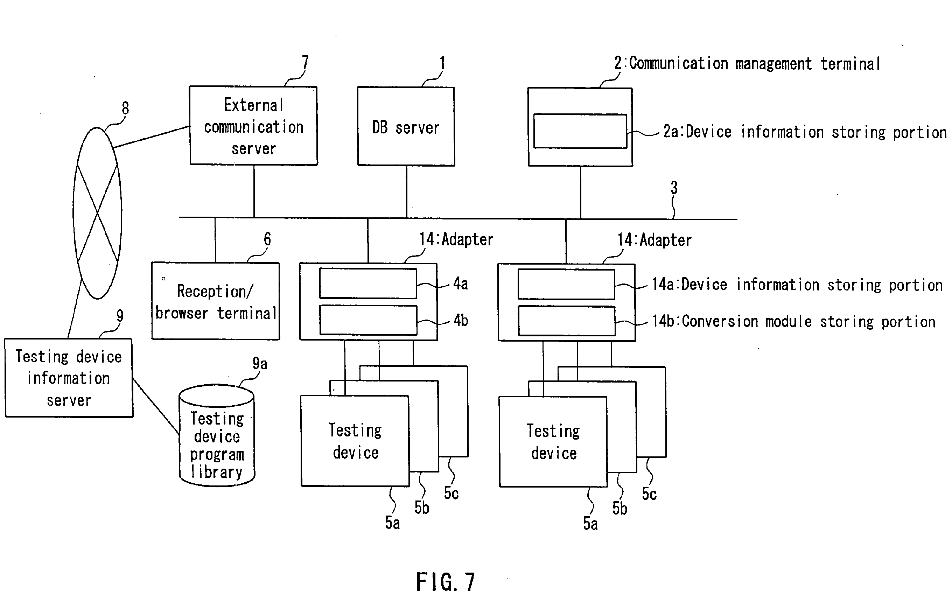

As shown in FIG. 7, a data management system according to the present embodiment includes a DB server 1, a communication management terminal 2, a LAN 3, adapters 14, testing devices 5 (5a, 5b ...), a reception/browser terminal 6, an external communication server 7, etc. The adapter 14 used in the data management system in the present embodiment is different in operation from the adapter 4 in the first embodiment. Further, the adapter 14 has a function of accessing a testing device information server 9 via the external communication server 7 and the internet 8.

The testing device information server 9 has a testing device program library 9a. The testing device program library 9a stores analytical modules to be stored in the adapter 14 corresponding to various kinds of the testing devices 5. The analytical modules include information used by the adapter 14 for specifying a model by a feature of the individual message (model specifying information) and a conversion program used by the adapter 14 for converting the individual message into the common message. The model specifying information is information on the feature in the message, which serves as a clue to specify the model by the message when the adapter 14 receives the individual message from the new testing device 5, and the details thereof will be described later. The analytical module corresponding to each model of the testing devices 5 is formed by a manufacturer of the testing devices 5 and registered in the above-described library at the time of releasing a new model and the version upgrade of the existing model.

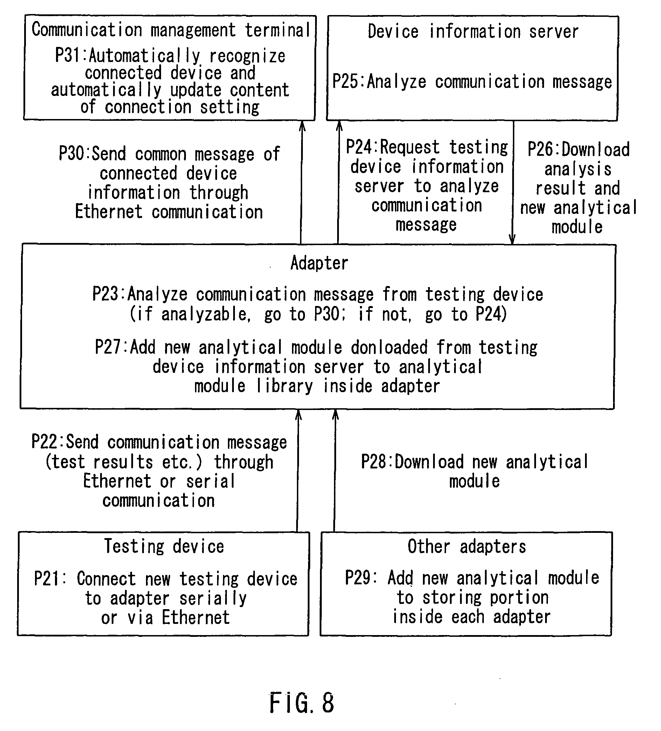

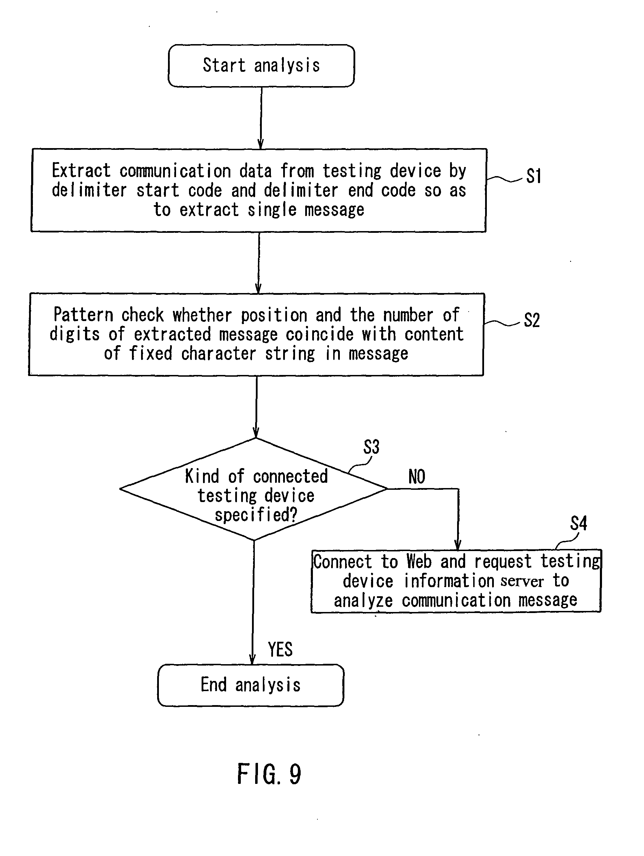

This data management system is similar to the data management system described in the first embodiment in terms of the operation in usual testing but is different therefrom in the operation when a new testing device 5 is connected to the adapter 14. Now, the following is an explanation of the operation of the present data management system when a new testing device is added, with reference to FIG. 8 and FIG. 9.

The new testing device 5 is serially connected to an empty port of the adapter 14 with its sending function turned ON (P21). The connected testing device 5 forms a message containing a test result and sends it to the adapter 14 through serial communication every time a testing is carried out or at a predetermined timing (at a preset time, every time a predetermined number of tests ends, or the like) (P22).

On receipt of the message from the newly-connected testing device 5, the adapter 14 analyzes the received message in order to specify the kind of the testing device 5 from the feature of the message (P23). In a conversion module storing portion 14b inside the adapter 14, analytical modules of predetermined testing devices 5 are registered in advance. In other words, the adapter 14 can process the individual message from the testing device 5 whose analytical module has been registered in the conversion module storing portion 14b but has to access the testing device information server 9 and obtain a necessary analytical module in the case of the testing device 5 whose analytical module is not registered in the conversion module storing portion 14b, for example, in the case of a new model of the testing device 5 or the like.

An exemplary procedure of the analysis of the above-noted P23 will be described with reference to FIG. 9. First, the adapter 14 detects a delimiter start code indicating the beginning of the message (for example, STX or the like) and a delimiter end code indicating the end of the message (for example, ETX, ETB or the like) in the communication data from the testing device 5, thereby extracting data between these codes as a single message (S1). It should be appreciated that the length of the extracted single message (message length) also serves as a criterion for specifying the kind of the testing device 5. Furthermore, the adapter 14 searches whether a predetermined character string is present in the extracted message and checks whether a pattern, a position and the number of digits of this character string coincide with those in the model specifying information of a known testing device 5 that the adapter 14 stores in the conversion module storing portion 14b (S2).

In S2, if a predetermined pattern of the character string is detected while having a position and the number of digits that coincide with those in the model specifying information stored in the conversion module storing portion 14b of the adapter 14, it is assumed that a program for converting the individual message of this testing device 5 into the common message or the like is already present in the storing portion inside the adapter 14, and thus the procedure goes on to P30 in FIG. 8. In S3 of FIG. 9, if the kind of the newly-connected testing device 5 cannot be specified, the adapter 14 submits the analysis of the message extracted in S1 to the testing device information server 9 via the external communication server 7 (S4, P24 in FIG. 8).

If the kind of the newly-connected testing device 5 can be specified by the analysis in the above-noted P23, the adapter 14 forms a common message containing the device information of this testing device 5 and sends it to the communication management terminal 2 through the Ethernet communication (P30). The communication management terminal 2 contains in the device information storing portion 2a the information on the testing device 5 connected to each adapter 14 and, on receipt of the common message sent out in P30, automatically updates the content stored in the device information storing portion 2a (P31).

On the other hand, if the kind of the newly-connected testing device 5 cannot be specified by the analysis in the above-noted P23 and the request of analyzing the message is made to the testing device information server 9, the testing device information server 9 checks whether the pattern, the position and the number of digits of the predetermined character string in the message coincide with any of the model specifying information stored in the testing device program library 9a (P25). Then, after specifying the kind of the newly-connected testing device 5, the testing device information server 9 takes out the analytical module for this model together with the device information of the specified model from the testing device program library 9a and sends them to the adapter 14 (P26).

The adapter 14 receives the device information and the analytical module sent out from the testing device information server 9 in the above-described P26 via the internet 8 and the external communication server 7 and stores them in the device information storing portion 14a and the conversion module storing portion 14b (P27). Accordingly, hereinafter, the adapter 14 can identify the individual message of the newly-connected testing device 5 and convert it into the common message.

Also, the adapter 14 that has received and stored the analytical module for the new testing device 5 in the above-noted P27 forwards this analytical module to all the other adapters 14 connected to the LAN 3 for storage (P28, P29). In this way, all the adapters 14 connected to the LAN 3 now can identify the individual message of the newly-connected testing device 5 and convert it into the common message.

Although the above description has been directed to an example of accessing the testing device information server 9 as necessary when a new testing device 5 is connected to the adapter 14, the method for accessing the testing device information server 9 is not limited to this. For example, any one of the adapters 14 connected to the LAN 3 may access the testing device information server 9 periodically to see whether any analytical module for a testing device to be released or any upgraded analytical module for an existing testing device has been registered, and if there is a new analytical module, download and register it in its own storing portion.

Moreover, in the present embodiment, the connection topology between the adapter 14 and the testing device 5 also may be the Ethernet connection or a serial connection.

The first and second embodiments have illustrated the testing devices 5a, 5b ... as an example of data generating devices, the data generating devices are not limited to them but may be measuring devices or any other devices. Also, the number of the adapters 4 (14) on the network and the number of the testing devices 5 to be connected to the adapter 4 (14) are not limited to the specific examples shown in FIG.1 and FIG. 7.

As described above, in accordance with the present invention, it is possible to provide a data relay device and a data management system that eliminate the need for changing the setting when a new testing or measuring device is added.

## Claims

1. A data relay device for connecting to a network a plurality of kinds of data generating devices generating data in different formats, comprising:
a data receiving portion for receiving the data from the plurality of kinds of data generating devices; and
a converting portion for converting the data received by the data receiving portion into a common format that is processable by other devices on the network.

2. The data relay device according to claim 1, further comprising
a connected device information storing portion for storing device information on the connected data generating devices, and
a device information updating portion for, when receiving from one of the data generating devices data containing device information of the data generating device, making a comparison of the device information in the received data and the device information stored in the connected device information storing portion and updating a content of the connected device information storing portion according to a result of the comparison.

3. The data relay device according to claim 2, further comprising a device information sending portion for sending the device information received from the data generating device to a data management device for processing the data from the data generating device via the network.

4. The data relay device according to claim 1, further comprising
a conversion program storing portion for storing a conversion program for causing the converting portion to conduct a conversion processing according to the kind of each of the data generating devices, and
a conversion program obtaining portion for determining whether a conversion program for a data generating device is stored in the conversion program storing portion when the data generating device is newly connected and, if not, requesting the conversion program.

5. The data relay device according to claim 4, further comprising an analyzing portion for extracting a feature of the data received from the data generating device, thereby specifying the kind of the connected data generating device.

6. A data management system in which, using a data relay device for connecting to a network a plurality of kinds of data generating devices generating data in different formats, the data generating devices are connected to a data management device on the network, the data relay device comprising:
a data receiving portion for receiving the data from the plurality of kinds of data generating devices; and
a converting portion for converting the data received by the data receiving portion into a common format that is processable by other devices on the network;
wherein the data management device processes the data from the data generating devices in the common format.

7. The data management system according to claim 6, wherein the data relay device further comprises
a connected device information storing portion for storing device information on the connected data generating devices, and
a device information updating portion for, when receiving from one of the data generating devices data containing device information of the data generating device, making a comparison of the device information in the received data and the device information stored in the connected device information storing portion and updating a content of the connected device information storing portion according to a result of the comparison.

8. The data management system according to claim 7, wherein the data relay device further comprises a device information sending portion for sending the device information received from the data generating device to the data management device via the network.

9. The data management system according to claim 6, further comprising a conversion program storing device for storing conversion programs for various kinds of the data generating devices,
wherein the data relay device further comprises
a conversion program storing portion for storing a conversion program for causing the converting portion to conduct a conversion processing according to the kind of each of the data generating devices, and
a conversion program obtaining portion for determining whether a conversion program for a data generating device is stored in the conversion program storing portion when the data generating device is newly connected and, if not, requesting the conversion program from the conversion program storing device.

10. The data management system according to claim 9, wherein the data relay device further comprises an analyzing portion for extracting a feature of the data received from the data generating device, thereby specifying the kind of the connected data generating device.

11. The data management system according to claim 9, wherein the conversion program storing device further comprises an analyzing portion for extracting a feature of the data received from the data generating device, thereby specifying the kind of the connected data generating device.

12. The data management system according to claim 9, wherein the data relay device sends the conversion program obtained from the conversion program storing device to other data relay devices connected to the network.

13. The data management system according to claim 9, wherein the data relay device periodically accesses the conversion program storing device and, if a new conversion program is stored, obtains the conversion program and stores it in the conversion program storing portion.
